# EUROPÄISCHE PATENTSCHRIFT

(11) **EP 2 676 307 B1**
(45) Veröffentlichungstag und Bekanntmachung des Hinweises auf die Patenterteilung: **29.06.2016**
(21) Anmeldenummer: 12701441.3
(22) Anmeldetag: 17.01.2012
(51) Int. Cl.: A62C 3/16, A62C 99/00, H01M 2/10, H01M 10/617, H01M 10/659, H01M 10/66, H01M 10/6572

(54) **ANORDNUNG MIT ENERGIESPEICHER**
ARRANGEMENT COMPRISING AN ENERGY STORE
DISPOSITIF COMPORTANT UN ACCUMULATEUR D'ÉNERGIE

(30) Priorität: 15.02.2011 DE 102011011301
(43) Veröffentlichungstag der Anmeldung: 25.12.2013
(73) Patentinhaber: Sew-Eurodrive GmbH & Co. KG, 76646 Bruchsal (DE)
(72) Erfinder: SCHMIDT, Josef, 76676 Graben-Neudorf (DE); HAUCK, Matthias, 68723 Schwwetzingen (DE)
(86) Internationale Anmeldenummer: PCT/EP2012/000180
(87) Internationale Veröffentlichungsnummer: WO 2012/110180

(56) Entgegenhaltungen:
- EP-A1- 0 588 004
- DE-A1- 3 807 633
- DE-A1-102007 050 812
- JP-A- 8 138 638
- JP-A- 2000 030 739
- JP-A- 2001 211 556
- US-A- 6 006 944
- US-A1- 2009 084 704
- US-B1- 6 304 444
- US-B1- 6 356 434

## Beschreibung

Die Erfindung betrifft eine Anordnung mit Energiespeicher.

Es ist bekannt, Energiespeicher, wie beispielsweise Batterieen oder Akkumulatoren in einem Fahrzeug anzuordnen, um einen Elektroantrieb des Fahrzeugs zu versorgen.

Aus der US 6 304 444 B1 ist eine im Untergrund installierte Batterie bekannt.

Aus der US 6 006 944 A ist ein Batteriespeicher bekannt.

Aus der JP 2001 211556 A ist ein Batteriesystem für ein Haus bekannt.

Aus der US 6 356 434 B1 ist eine im Untergrund installierte Batterie für Kommunikationsanlagen bekannt.

Aus der EP 0 588 004 A1 ist eine elektrische Speicherbatterie für einen Fahrzeugantrieb bekannt.

Aus der DE 38 07 633 A1 ist eine wiederaufladbare Batterie bekannt.

Aus der DE 10 2007 050812 A1 ist ein elektrochemischer Energiespeicher bekannt.

Aus der JP 8 138638 A ist eine Batteriespeicheranlage bekannt.

Aus der JP 2000 030739 A ist eine mittels Vakuum wärmeisolierte Natrium-Batterie bekannt.

Aus der US 2009/084704 A1 ist ein Untergrundbatteriesystem bekannt.

Der Erfindung liegt daher die Aufgabe zugrunde, eine Anordnung mit Energiespeicher für die stationäre Verwendung weiterzubilden.

Erfindungsgemäß wird die Aufgabe bei der Anordnung mit Energiespeicher nach den in Anspruch 1 angegebenen Merkmalen gelöst.

Wichtige Merkmale bei der Anordnung mit Energiespeicher nach Anspruch 1 sind, dass der Energiespeicher, insbesondere Batterie, Akkumulator oder dergleichen, in einem Gehäuse angeordnet ist, wobei außerhalb des Gehäuses ein Thermogenerator und/oder ein Wärmetauscher angeordnet ist, insbesondere wobei zwischen Gehäuse und Thermogenerator beziehungsweise Wärmetauscher ein erstes Material und außerhalb des Thermogenerators beziehungsweise Wärmetauschers ein zweites Material angeordnet ist.

Wichtige Merkmale der Erfindung bei der Anordnung mit Energiespeicher nach Anspruch 2. sind, dass der Energiespeicher in einem Gehäuse angeordnet ist, wobei das Gehäuse im Boden versenkt angeordnet ist, insbesondere also zumindest teilweise von Erdreich, Sand, Kies, Steinen und/oder Wasser umgeben ist.

Von Vorteil ist dabei, dass vom Energiespeicher erzeugte Wärme in das umgebende Bodenmaterial abgebbar ist und dort nutzbar ist. Darüber hinaus ist aber eine Temperierung erreichbar, so dass der Energiespeicher auf ungefähr gleichem Temperaturniveau sich befindet. Dies gilt insbesondere auch für Sommer und Winter, da die Temperaturschwankungen im Bodenmaterial bei versenkter Anordnung des Energiespeichers gering sind und daher der Energiespeicher bei im Wesentlichen konstanter oder nur gering schwankender Temperatur betreibbar ist. Insbesondere bei Lithium-Ionen-Akkumulatoren ist dies von Vorteil.

Weiter ist von Vorteil, dass die Klimatisierung nicht weitere Komponenten, wie Lüftung, Klimagerät oder dergleichen, benötigt. Daher ist eine geringere Wahrscheinlichkeit von Fehlfunktionen und eine höhere Verfügbarkeit erreichbar.

Weiterer Vorteil ist auch, dass das Gehäuse den Energiespeicher zusätzlich schützt und Umwelteinflüsse fernhält. Darüber hinaus ist aber auch die Umwelt geschützt vor dem Energiespeicher. Hierzu ist das Gehäuse beispielsweise wasserdicht und druckfest ausführbar. Auf diese Weise sind also zerstörerische Wirkungen der Umgebung vom Energiespeicher fernhaltbar, die Wahrscheinlichkeiten für Fehlfunktion reduzierbar und die Umwelt schützbar vor austretenden Chemikalien des Energiespeichers oder feuerbedingten Emissionen.

Von Vorteil ist dabei, dass das Gehäuse den Energiespeicher zusätzlich schützt und Umwelteinflüsse fernhält. Darüber hinaus ist aber auch die Umwelt geschützt vor dem Energiespeicher. Hierzu ist das Gehäuse beispielsweise wasserdicht und druckfest ausführbar. Auf diese Weise sind also zerstörerische Wirkungen der Umgebung vom Energiespeicher fernhaltbar, die Wahrscheinlichkeiten für Fehlfunktion reduzierbar und die Umwelt schützbar vor austretenden Chemikalien des Energiespeichers oder feuerbedingten Emissionen.

Von Vorteil ist auch, dass vom Energiespeicher erzeugte Wärme in das umgebende Bodenmaterial abgebbar ist und dort nutzbar ist. Darüber hinaus ist aber eine Temperierung erreichbar, so dass der Energiespeicher auf ungefähr gleichem Temperaturniveau sich befindet. Dies gilt insbesondere auch für Sommer und Winter, da die Temperaturschwankungen im Bodenmaterial bei versenkter Anordnung des Energiespeichers gering sind und daher der Energiespeicher bei im Wesentlichen konstanter oder nur gering schwankender Temperatur betreibbar ist. Insbesondere bei Lithium-Ionen-Akkumulatoren ist dies von Vorteil.

Bei einer vorteilhaften Ausgestaltung weist das Gehäuse eine Gehäuseteil, insbesondere topfförmiges Gehäuseteil, insbesondere Unterteil, und ein Deckelteil auf. Von Vorteil ist dabei, dass ein Eindringen von Wasser, beispielsweise bei erhöhtem Grundwasserspiegel, verhinderbar ist.

Bei einer vorteilhaften Ausgestaltung hält das Gehäuse Überdruck stand, ist als druckfester Behälter, also Druckbehälter, ausgeführt, insbesondere welcher bis zu einem kritischen Überdruck in seinem Innenbereich stand. Von Vorteil ist dabei, dass auch bei Explosion und/oder Brand des Energiespeichers der so entstehende Gas-Überdruck beherrschbar ist.

Bei einer vorteilhaften Ausgestaltung ist der Wärmetauscher mit einer Kältemaschine und/oder Wärmepumpe verbunden, insbesondere mittels einer Rohrleitung. Von Vorteil ist dabei, dass die Abwärme des Energiespeichers nutzbar ist - beispielsweise zum Heizen eines Gebäudes. Dabei ist die Wärmepumpe mit Wärmetauscher auch ohne Energiespeicher funktionstüchtig, da sie aus dem Bodenmaterial Wärme entzieht. Bei zusätzlich einströmender Wärme des Energiespeichers ist eine effektivere Ausnutzung, also ein erhöhter Wirkungsgrad der gesamten Anordnung, erreichbar.

Bei einer vorteilhaften Ausgestaltung arbeitet der Thermogenerator nach einem thermoelektrischen Effekt, insbesondere nach dem Seebeck-Effekt. Von Vorteil ist dabei, dass elektrische Energie aus der Abwärme des Energiespeichers erzeugbar ist.

Bei einer vorteilhaften Ausgestaltung weist das erste Material eine höhere Wärmekapazität als das zweite Material auf,

insbesondere wobei das erste Material mindestens 20 Volumenprozent Wasser aufweist, insbesondere wobei das erste Material mindestens 50 Volumenprozent Steine und/oder Sand aufweist. Von Vorteil ist dabei, dass die Abwärme des Energiespeichers speicherbar ist und nachfolgend nutzbar ist. Außerdem ist durch die hohe Wärmekapizität eine möglichst geringe Temperaturschwankung der Umgebungstemperatur des Energiespeichers bewirkbar.

Erfindungsgemäß weist das Deckelteil ein Löschmittel, insbesondere Sand, auf, welches bei mechanisch oder thermisch bedingter Verformung, Strukturänderung oder Zerstörung eine Teilbereichs des Deckelteils freigegeben wird, insbesondere herabfällt auf den Energiespeicher,
wobei der Teilbereich an der Unterseite des Deckelteils angeordnet ist,
welches bei mechanisch oder thermisch bedingte Verformung, Strukturänderung oder Zerstörung eine Ausnehmung in der Wandung des Deckelteils erzeugt wird. Von Vorteil ist dabei, dass bei auftretendem Feuer nach grundlegenden physikalischen Prinzipien Sicherheit gewährleistbar ist. Denn die auftretende hohe Temperatur wirkt naturgemäß auf die Unterseite des Deckelteils ein. Da dieses aus einem thermisch bedingt strukturveränderlichen Stoff, wie beispielsweise Kunststoff, besteht, verringert sich die mechanische Stabilität der Unterseite des Deckelteils und die gravitationsbedingte Gewichtskraft des Löschmittels bewirkt eine Verformung der Unterseite bis diese aufreißt und das Löschmittel herunterfällt. Somit ist auf naturgesetzlichen Wirkmechanismen basierend Sicherheit hergestellt, so dass der Brand erstickt wird.

Erfindungsgemäß ist das Deckelteil ein Hohlteil, in dessen Hohlraum das Löschmittel angeordnet ist. Von Vorteil ist dabei, dass die verringerte Wandstärke des Hohlteils eine derart geringe mechanische Stabilität aufweist, dass bei Strukturveränderung, wie beispielsweise thermisch bedingtem Phasenübergang des Materials des Deckelteils, eine Ausnehmung erzeugbar ist durch die am Löschmittel wirkende Schwerkraft. Somit ist ein gewichtskraftbedingtes Aufreißen der Unterseite des Deckelteils die Folge.

Erfindungsgemäß ist das Deckelteil an seiner Oberseite eine verschließbare Öffnung auf zum Befüllen des Hohlraums mit Löschmittel. Von Vorteil ist dabei, dass das Löschmittel in einfacher Weise einfüllbar ist.

Erfindungsgemäß weist ist das den Energiespeicher umgebende Gehäuse mit einem Schutzgas befüllt, insbesondere mit Kohlendioxid oder SF₆ oder einem anderen chemisch inerten Gas, wobei das Schutzgas bei Normalbedingungen, insbesondere Normaldruck und Normaltemperatur oder einer Temperatur zwischen -10° Celsius bis +50° Celsius eine höhere Dichte als Sauerstoff und/oder Luft aufweist. Von Vorteil ist dabei, dass Sauerstoff verdrängbar ist und Brandgefahr reduziert ist.

Erfindungsgemäß weist das Gehäuse eine Anschlussvorrichtung für das Befüllen mit dem Schutzgas auf. Von Vorteil ist dabei, dass das Schutzgas in einfacher Weise befüllbar und nachfüllbar ist.

Erfindungsgemäß ist das Deckelteil des Gehäuses aus Kunststoff gefertigt. Von Vorteil ist dabei, dass schon bei geringen Temperaturanstiegen eine Strukturveränderung, insbesondere Phasenübergang, des Material des Deckelteils bewirkbar ist. Hierunter wird hier auch ein Übergang zum plastischen Fließen des Materials verstanden. Bei einer vorteilhaften Ausgestaltung weist der Energiespeicher Lithium auf und/oder ist ein Lithium-Ionen-Akkumulator. Von Vorteil ist dabei, dass eine besonders lange Standzeit, eine große Anzahl von Ladezyklen und eine hohe Speicherkapazität erreichbar ist. Denn die im Wesentliche konstante Umgebungstemperatur führt zu einem entsprechenden optimalen Betrieb des Energiespeichers.

Bei einer vorteilhaften Ausgestaltung wird als erstes und zweites Material dasselbe Material verwendet. Von Vorteil ist dabei, dass der Aufbau möglichst einfach ausführbar ist.

Weitere Vorteile ergeben sich aus den Unteransprüchen. Die Erfindung ist durch die Merkmalskombination der Ansprüche definiert.

Die Erfindung wird nun anhand von schematischen Abbildungen näher erläutert:

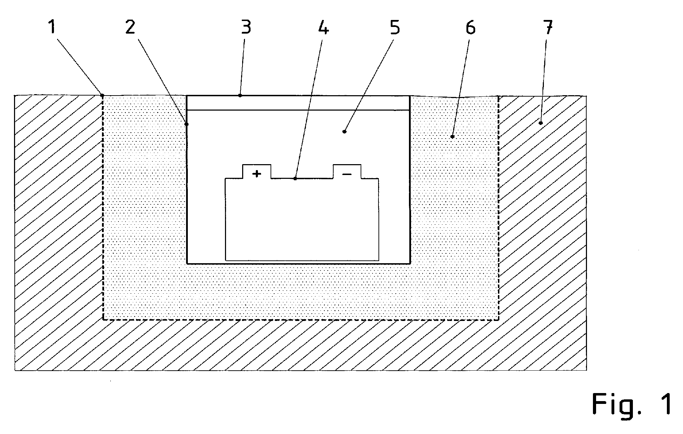

In der Figur 1 ist ein erfindungsgemäßes Containment, also eine Anordnung, für einen Energiespeicher gezeigt.

Dabei weist der Energiespeicher einen elektrochemischen Energiespeicher 4 auf, dem elektrische Energie zuführbar ist, wobei ein Anteil dieser Energie in diesem elektrochemischen Energiespeicher 4 abspeicherbar ist. Die bei Zuführung und Abspeicherung entstehenden Verluste werden als Wärme abgegeben.

Diese Wärme strömt dann durch die Wandung eines Druckbehälters, insbesondere auch durch ein Gehäuseteil 2 des Druckbehälters in einen ersten Raumbereich mit einem ersten Material 6. Abhängig von dem Wärmestromverlauf und der Wärmekapazität des ersten Materials erreicht dieses Material dann eine entsprechende Temperatur.

Der erste Raumbereich ist begrenzt durch einen Wärmetauscher 1, welcher vorzugsweise flächig ausgeführt ist und mit einer Kältemaschine beziehungsweise Wärmepumpe verbunden ist. Auf diese Weise ist aus dem Wärmestrom Energie rückgewinnbar und/oder die Heizung einer Wohnung versorgbar.

Außen ist die Anordnung von einem zweiten Material 7 umgeben.

Als erstes und zweites Material ist Erde, Sand, Kies und/oder ein anders Bodenmaterial verwendbar.

Der den elektrochemischen Energiespeicher, wie Akkumulator, Batterie oder dergleichen, enthaltende Druckbehälter ist aus einem Gehäuseteil 2 des Druckbehälters und einem darauf aufgesetzten Deckelteil 3 zusammensetzbar. Er hält Überdruck stand und verbessert auf diese Weise den Schutz der Umwelt im Falle eines Defekts des elektrochemischen Energiespeichers 4. Das Deckelteil 3 weist ein Löschmittel auf, so dass bei Veränderung oder Zerstörung des Deckelteils 3 durch beispielsweise Brand, Explosion oder aus dem elektrochemischen Energiespeicher austretendes Chemikalien das Löschmittel, wie beispielsweise Sand herunterfällt auf den elektrochemischen Energiespeicher. Dabei ist das Deckelteil 3 derart ausführbar, dass schon bei durch einen Temperaturanstieg bewirkten Strukturveränderung des Deckelteils 3, insbesondere Schmelzen des Materials des Deckelteils 3, das im Deckelteil 3 bevorratete Löschmittel herunterfällt durch eine Ausnehmung, die beispielsweise durch die Gewichtskraft des Löschmittels in der Wandung des Deckelteil 3 erzeugt wird.

Erfindungsgemäß ist das Material des Deckelteils 3 Kunststoff oder umfasst Kunststoff. Dabei ist das Deckelteil als Hohlteil ausführbar, wobei der hohle Teil mit Sand oder einem anderen Löschmittel verfüllt ist. Sobald das Hohlteil in einem an dessen Unterseite liegenden Bereich schmilzt, erzeugt die Gewichtskraft des Löschmittels, insbesondere Sands, eine Ausnehmung in der Wandung des Hohlteils, so dass das Löschmittel auf den Energiespeicher 4 herunterfällt und somit den Brand kühlt und/oder erstickt.

Vorzugsweise ist das Volumen des in das Hohlteil eingefüllten Sands derart, dass nach Herunterfallen des gesamten Volumens des Löschmittels in das topfförmig ausgebildete Gehäuseteil 2 der Energiespeicher bedeckt ist vom Löschmittel.

Im aus dem Gehäuseteil 2 und dem Deckelteil 3 gebildeten Druckbehälter wird ein Schutzgas 5 vorgesehen, wobei vorzugsweise ein Feuer erstickendes Gas verwendet wird. Hierzu eignet sich besonders ein Gas, dessen Dichte bei Normaldruck den Umgebungstemperaturen, also beispielsweise zwischen -40°C oder -20°C bis +40°C, größer ist als diejenige von Sauerstoff. Vorzugsweise wird Kohlendioxid oder SF₆ verwendet, wobei die Temperatur des Druckbehälters dann derart sein muss, dass diese Gase gasförmig bleiben. Mittels des Schutzgases ist die Brandgefahr verhinderbar oder zumindest reduzierbar.

Bei Anordnen der Erfindung in einer derartigen gemäßigten Klimazone der Erde, ist durch geeignete Wahl des Standortes und Dimensionierung des im Erdreich angeordneten Druckbehälters das Unterschreiten von Null Grad Celsius im Druckbehälter verhinderbar. Somit ist eine einfache Temperierung erreichbar. Entsprechend einfach ist eine Klimatisierung des Druckbehälters erreichbar.

Vorzugsweise ist der Druckbehälter wasserdicht. Somit ist das Eindringen von Wasser zum elektrochemischen Energiespeicher und daraus bewirkter Knallgasbildung verhinderbar.

Als Energiespeicher ist eine Batterie oder ein Akkumulator verwendbar, insbesondere eine Hochvoltbatterie, beispielsweise mit einer Spannung zwischen 200 Volt und 1000 Volt. Vorzugsweise ist die Batterie als Lithium-Ionen-Batterie ausgeführt. In Zusammenwirkung mit dem Einbau des Druckbehälters ins Erdreich ist ein enger Temperaturbereich als Temperatur für die Batterie ohne großen weiteren Klimatisierungsaufwand, wie beispielsweise Lüftung, insbesondere mit elektromotorisch angetriebenem Lüfter oder dergleichen, erreichbar und somit die optimale Speicherfähigkeit und Leistung erreichbar

Vorzugsweise wird der Energiespeicher unterirdisch angeordnet, so dass das umgebende Erdreich verwendbar ist zur Temperierung des Druckbehälters samt Energiespeicher. Die große Wärmekapazität des umgebenden Erdreichs bewirkt somit, dass nur geringe Temperaturschwankungen am Druckbehälter auftreten.

In einem weiteren erfindungsgemäßen Ausführungsbeispiel ist als erstes Material ein wasserhaltiges Gemisch, beispielsweise Kies oder Sand mit Wasser verwendbar. Als zweites Material ist Bodenmaterial, wie Erde, Sand, Kies oder auch umgebendes Gestein verwendbar. Vorzugsweise ist hierbei der Wärmetauscher wasserdicht ausgeführt und umgibt das erste Material topfartig, um das Wegfließen von Wasser ins zweite Material hinein zu verhindern

In weiteren erfindungsgemäßen Ausführungsbeispielen wird statt des Wärmetauschers mit angeschlossener Wärmepumpe beziehungsweise Kältemaschine ein Thermogenerator vorgesehen, also zwischen ersten Material 6 und zweitem Material 7 angeordnet. Der Thermogenerator arbeitet vorzugsweise nach einem thermoelektrischen Effekt, insbesondere Seebeck-Effekt, so dass direkt elektrische Energie aus der Temperaturdifferenz zwischen erstem Material 6 und zweitem Material 7 erzeugbar ist. Alternativ arbeitet der Thermogenerator nach dem magnetokalorischen Effekt.

### Bezugszeichenliste

- 1: Wärmetauscher
- 2: Gehäuseteil des Druckbehälters
- 3: Deckelteil mit Löschmittel
- 4: Energiespeicher
- 5: Schutzgas
- 6: erstes Material
- 7: zweites Material

## Patentansprüche

1. Anordnung mit Energiespeicher,
wobei der Energiespeicher, insbesondere Batterie, Akkumulator oder dergleichen, in einem Gehäuse angeordnet ist,
**wobei das Deckelteil ein Löschmittel aufweist, welches bei mechanisch oder thermisch bedingter Verformung, Strukturänderung oder Zerstörung eines Teilbereichs des Deckelteils freigegeben wird und herabfällt auf den Energiespeicher,**
**wobei der Teilbereich an der Unterseite des Deckelteils angeordnet ist,**
**wobei durch die mechanisch oder thermisch bedingte Verformung, Strukturänderung oder Zerstörung eine Ausnehmung in der Wandung des Deckelteils erzeugt wird,**
**wobei das Deckelteil ein Hohlteil ist, in dessen Hohlraum das Löschmittel angeordnet ist,**
**dadurch gekennzeichnet dass das Deckelteil an seiner Oberseite eine verschließbare Öffnung aufweist zum Befüllen des Hohlraums mit Löschmittel,**
wobei außerhalb des Gehäuses ein Thermogenerator und/oder ein Wärmetauscher angeordnet ist, insbesondere wobei zwischen Gehäuse und Thermogenerator beziehungsweise Wärmetauscher ein erstes Material und außerhalb des Thermogenerators beziehungsweise Wärmetauschers ein zweites Material angeordnet ist,
**wobei das den Energiespeicher umgebende Gehäuse mit einem Schutzgas befüllt ist, insbesondere mit Kohlendioxid oder SF₆ oder einem anderen chemisch inerten Gas, wobei das Schutzgas bei Normalbedingungen, insbesondere Normaldruck und Normaltemperatur oder einer Temperatur zwischen -10° Celsius bis +50° Celsius, eine höhere Dichte als Sauerstoff und/oder Luft aufweist,**
**wobei das Gehäuse eine Anschlussvorrichtung für das Befüllen mit dem Schutzgas aufweist,**
**wobei das Deckelteil des Gehäuses aus Kunststoff gefertigt ist.**

2. **Anordnung nach Anspruch 1,**
**dadurch gekennzeichnet, dass**
**das Gehäuse im Boden versenkt angeordnet ist und zumindest teilweise von Bodenmaterial umgeben ist, insbesondere also zumindest teilweise von Erdreich, Sand, Kies, Steinen und/oder Wasser umgeben ist,**
**und/oder dass das Gehäuse ein Deckelteil und ein topfförmiges Gehäuseteil als durch das Deckelteil verschließbares Unterteil aufweist.**

3. **Anordnung nach Anspruch 1 oder 2,**
**dadurch gekennzeichnet, dass**
**der Wärmetauscher mit einer Kältemaschine und/oder Wärmepumpe verbunden ist mittels einer Rohrleitung,**
**wobei der Thermogenerator nach einem thermoelektrischen Effekt arbeitet, insbesondere nach dem Seebeck-Effekt oder nach dem magnetokalorischen Effekt, wobei zwischen Gehäuse und Thermogenerator beziehungsweise Wärmetauscher ein erstes Material und außerhalb des Thermogenerators beziehungsweise Wärmetauschers ein zweites Material angeordnet ist,**
**wobei das erste Material eine höhere Wärmekapazität als das zweite Material aufweist.**

4. Anordnung nach mindestens einem der vorangegangenen Ansprüche,
**dadurch gekennzeichnet, dass**
das Gehäuse ein Deckelteil und ein Gehäuseteil, insbesondere topfförmiges Gehäuseteil, insbesondere als durch das Deckelteil verschließbares Unterteil, aufweist.

5. Anordnung nach mindestens einem der vorangegangenen Ansprüche,
**dadurch gekennzeichnet, dass**
das Gehäuse ein Druckbehälter ist, insbesondere welcher bis zu einem kritischen Überdruck in seinem Innenbereich stand hält.

6. Anordnung nach mindestens einem der vorangegangenen Ansprüche,
**dadurch gekennzeichnet, dass**
der Wärmetauscher mit einer Kältemaschine und/oder Wärmepumpe verbunden ist, insbesondere mittels einer Rohrleitung.

7. Anordnung nach mindestens einem der vorangegangenen Ansprüche,
**dadurch gekennzeichnet, dass**
der Thermogenerator nach einem thermoelektrischen Effekt arbeitet, insbesondere nach dem Seebeck-Effekt oder nach dem magnetokalorischen Effekt.

8. Anordnung nach Anspruch 3
**dadurch gekennzeichnet, dass**
das erste Material eine höhere Wärmekapazität als das zweite Material aufweist, insbesondere wobei das erste Material mindestens 20 Volumenprozent Wasser aufweist, insbesondere wobei das erste Material mindestens 50 Volumenprozent Steine und/oder Sand aufweist.

9. Anordnung nach Anspruch 3,
**dadurch gekennzeichnet, dass**
als erstes und zweites Material dasselbe Material verwendet wird.

10. Anordnung nach mindestens einem der vorangegangenen Ansprüche,
**dadurch gekennzeichnet, dass**
der Energiespeicher Lithium aufweist und/oder ein Lithium-Ionen-Akkumulator ist.

## Claims

1. An arrangement with energy store,
wherein the energy store, in particular battery, rechargeable battery or the like, is arranged in a housing,
wherein the cover part has an extinguishing agent which is released in the event of mechanically or thermally caused deformation, structural change or destruction of a partial region of the cover part and drops down onto the energy store,
wherein the partial region is arranged on the underside of the cover part,
wherein a recess is produced in the wall of the cover part due to the mechanically or thermally caused deformation, structural change or destruction,
wherein the cover part is a hollow part, in the cavity of which the extinguishing agent is arranged,
**characterised in that**
the cover part has on its upper side a closable opening for filling the cavity with extinguishing agent,
a thermoelectric generator and/or a heat exchanger being arranged outside the housing, in particular with a first material being arranged between the housing and the thermoelectric generator or heat exchanger, and a second material being arranged outside the thermoelectric generator or heat exchanger,
the housing surrounding the energy store being filled with a protective gas, in particular with carbon dioxide or SF₆ or another chemically inert gas,
the protective gas under normal conditions, in particular normal pressure and normal temperature, or a temperature of between -10° Celsius to +50° Celsius, having a greater density than oxygen and/or air,
the housing having a connection device for filling with the protective gas,
the cover part of the housing being manufactured from plastics material.

2. An arrangement according to Claim 1,
**characterised in that**
the housing is arranged sunk in the ground and is surrounded at least partially by soil material, in particular therefore is surrounded at least partially by soil, sand, gravel, stones and/or water,
and/or **in that** the housing has a cover part and a pot-shaped housing part as the lower part which can be closed by the cover part.

3. An arrangement according to Claim 1 or 2,
**characterised in that**
the heat exchanger is connected to a refrigerating machine and/or heat pump by means of piping,
the thermoelectric generator operating by thermoelectric effect, in particular by the Seebeck effect or by the magnetocaloric effect,
a first material being arranged between the housing and the thermoelectric generator or heat exchanger, and a second material being arranged outside the thermoelectric generator or heat exchanger,
the first material having a higher thermal capacity than the second material.

4. An arrangement according to at least one of the preceding claims,
**characterised in that**
the housing has a cover part and a housing part, in particular pot-shaped housing part, in particular as a lower part which can be closed by the cover part.

5. An arrangement according to at least one of the preceding claims,
**characterised in that**
the housing is a pressure vessel, in particular which withstands up to a critical excess pressure in its interior.

6. An arrangement according to at least one of the preceding claims,
**characterised in that**
the heat exchanger is connected to a refrigerating machine and/or heat pump, in particular by means of piping.

7. An arrangement according to at least one of the preceding claims,
**characterised in that**
the thermoelectric generator operates by thermoelectric effect, in particular by the Seebeck effect or by the magnetocaloric effect.

8. An arrangement according to Claim 3,
**characterised in that**
the first material has a higher thermal capacity than the second material,
in particular the first material having at least 20 volume percent water, in particular the first material having at least 50 volume percent stones and/or sand.

9. An arrangement according to Claim 3,
**characterised in that**
the same material is used as the first and second material.

10. An arrangement according to at least one of the preceding claims, **characterised in that**
the energy store has lithium and/or is a lithium-ion rechargeable battery.

## Revendications

1. Dispositif comportant un accumulateur d'énergie,
l'accumulateur d'énergie, en particulier une batterie, un accumulateur ou analogue, étant disposé dans un boîtier,
la partie couvercle présentant un agent d'extinction, lequel est libéré en cas de déformation, de modification de structure ou de destruction d'origine mécanique ou thermique d'une zone partielle de la partie couvercle et tombe sur l'accumulateur d'énergie,
la zone partielle étant disposée sur la face inférieure de la partie couvercle,
un évidement dans la paroi de la partie couvercle étant produit par la déformation, la modification de structure ou la destruction d'origine mécanique ou thermique,
la partie couvercle étant une partie creuse dans la cavité de laquelle l'agent extincteur est disposé,
**caractérisé en ce que**
la partie couvercle présente sur sa face supérieure une ouverture obturable permettant de remplir la cavité d'agent extincteur,
un générateur thermoélectrique et/ou un échangeur de chaleur étant disposé à l'extérieur du boîtier, en particulier un premier matériau étant disposé entre le boîtier et le générateur thermoélectrique ou l'échangeur de chaleur et un deuxième matériau étant disposé à l'extérieur du générateur thermoélectrique ou de l'échangeur de chaleur,
le boîtier entourant l'accumulateur d'énergie étant rempli d'un gaz protecteur, en particulier de dioxyde de carbone ou de SF₆ ou d'un autre gaz chimiquement inerte, le gaz protecteur présentant dans des conditions normales, en particulier à une pression normale et une température normale ou une température comprise entre -10° Celsius à +50° Celsius, une densité plus élevée que l'oxygène et/ou que l'air,
le boîtier présentant un dispositif de raccordement pour le remplissage avec le gaz protecteur,
la partie couvercle du boîtier étant réalisée en matière plastique.

2. Dispositif selon la revendication 1,
**caractérisé en ce que**
le boîtier est disposé enfoui dans le sol et au moins partiellement entouré par du matériau de sol, en particulier donc au moins partiellement entouré par de la terre, du sable, du gravier, des pierres et/ou de l'eau,
et/ou que le boîtier présente une partie couvercle et une partie boîtier en forme de pot sous la forme d'une partie inférieure obturable par la partie couvercle.

3. Dispositif selon la revendication 1 ou 2,
**caractérisé en ce que**
l'échangeur de chaleur est relié à une machine frigorifique et/ou une pompe à chaleur au moyen d'une tuyauterie,
le générateur thermoélectrique fonctionnant selon un effet thermoélectrique, en particulier selon l'effet Seebeck ou selon l'effet magnétocalorique,
un premier matériau étant disposé entre le boîtier et le générateur thermoélectrique ou l'échangeur de chaleur et un deuxième matériau étant disposé à l'extérieur du générateur thermoélectrique ou de l'échangeur de chaleur,
le premier matériau présentant une capacité thermique plus élevée que le deuxième matériau.

4. Dispositif selon au moins l'une des revendications précédentes,
**caractérisé en ce que**
le boîtier présente une partie couvercle et une partie boîtier, en particulier une partie boîtier en forme de pot, en particulier sous la forme d'une partie inférieure obturable par la partie couvercle.

5. Dispositif selon au moins l'une des revendications précédentes,
**caractérisé en ce que**
le boîtier est un récipient sous pression, en particulier qui résiste jusqu'à une surpression critique dans sa zone intérieure.

6. Dispositif selon au moins l'une des revendications précédentes,
**caractérisé en ce que**
l'échangeur de chaleur est relié à une machine frigorifique et/ou une pompe à chaleur, en particulier au moyen d'une tuyauterie.

7. Dispositif selon au moins l'une des revendications précédentes,
**caractérisé en ce que**
le générateur thermoélectrique fonctionne selon un effet thermoélectrique, en particulier selon l'effet Seebeck ou selon l'effet magnétocalorique.

8. Dispositif selon la revendication 3,
**caractérisé en ce que**
le premier matériau présente une capacité thermique plus élevée que le deuxième matériau,
en particulier le premier matériau présentant au moins 20 pour cent en volume d'eau, en particulier le premier matériau présentant au moins 50 pour cent en volume de pierres et/ou de sable.

9. Dispositif selon la revendication 3,
**caractérisé en ce que**
le même matériau est utilisé comme premier et deuxième matériau.

10. Dispositif selon au moins l'une des revendications précédentes,
**caractérisé en ce que**
l'accumulateur d'énergie présente du lithium et/ou est un accumulateur lithium-ion.
